(19) Europäisches Patentamt
European Patent Office
Office européen des brevets

(11) **EP 1 119 935 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: **99970227.7**

(22) Anmeldetag: **01.10.1999**

(51) Int Cl.$^7$: **H04L 1/08**, H04L 1/00

(86) Internationale Anmeldenummer:
**PCT/DE1999/003182**

(87) Internationale Veröffentlichungsnummer:
**WO 2000/021229 (13.04.2000 Gazette 2000/15)**

(54) **VERFAHREN ZUR DATENRATENANPASSUNG**

METHOD FOR ADAPTING DATA RATES

PROCEDE D'ADAPTATION DU DEBIT BINAIRE

(84) Benannte Vertragsstaaten:
**DE ES FR GB IT**

(30) Priorität: **06.10.1998 DE 19846067**
        **19.05.1999 DE 19922968**

(43) Veröffentlichungstag der Anmeldung:
**01.08.2001 Patentblatt 2001/31**

(73) Patentinhaber: **SIEMENS AKTIENGESELLSCHAFT**
**80333 München (DE)**

(72) Erfinder:
• **SOMMER, Volker**
  **D-13503 Berlin (DE)**
• **KÖHN, Reinhard**
  **D-14197 Berlin (DE)**
• **ULRICH, Thomas**
  **D-67098 Bad Dürkheim (DE)**
• **KRAUSE, Jörn**
  **D-12107 Berlin (DE)**
• **KLEIN, Anja**
  **D-10709 Berlin (DE)**

(56) Entgegenhaltungen:
• **TOSKALA A ET AL: "FRAMES FMA2 WIDEBAND-CDMA FOR UMTS" EUROPEAN TRANSACTIONS ON TELECOMMUNICATIONS,IT,EUREL PUBLICATION, MILANO, Bd. 9, Nr. 4, 1. Juli 1998 (1998-07-01), Seiten 325-335, XP000778096 ISSN: 1124-318X**
• **FRENGER P ET AL: "RATE MATCHING IN MULTICHANNEL SYSTEMS USING RCPC-CODES" IEEE VEHICULAR TECHNOLOGY CONFERENCE,US,NEW YORK, IEEE, Bd. CONF. 47, 1997, Seiten 354-357, XP000701819 ISBN: 0-7803-3660-7**

## Beschreibung

Die Erfindung betrifft ein Verfahren zur Datenratenanpassung für eine Datenübertragung über eine Funkschnittstelle zwischen einer Basisstation und einer Teilnehmerstation, insbesondere über breitbandige Funkschnittstellen, die ein CDMA-Teilnehmerseparierungsverfahren verwenden und pro Verbindung mehrere Dienste gleichzeitig bereitstellen.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind breitbandige (B = 5 MHz) Funkschnittstellen vorgesehen, die ein CDMA-Teilnehmerseparierungsverfahren (CDMA code division multiple access) zur Unterscheidung unterschiedlicher Übertragungskanäle verwenden und pro Verbindung mehrere Dienste gleichzeitig bereitstellen können. Dabei ergibt sich das Problem, wie die Daten verschiedener Dienste einer Verbindung zeitlich gemultiplext, d.h. in einen Rahmen eingetragen, werden sollen. Die Übertragungskapazität der Funkschnittstelle ist bestmöglich zu nutzen, insbesondere unter Berücksichtigung einer hohen Dynamik in der Varianz der Datenraten der einzelnen Dienste.

Aus ETSI STC SMG2 UMTS-L1, Tdoc SMG2 UMTS-L1 221/98, vom 25.8.1998, insbesondere, S.15-20, ist es bekannt, eine zweistufige Datenratenanpassung vorzunehmen. Eine erste Datenratenanpassung wird nach einer Kanalkodierung durchgeführt und soll die dienstspezifischen Dienstqualitäten (quality of service QoS) garantieren, da das gemeinsame Übertragen der Daten mehrerer Dienst ein gemeinsames Signal/Rausch-Verhältnis erzwingt. Durch eine zweite Datenratenanpassung nach dem Multiplexen wird eine kontinuierliche Übertragung garantiert. Der Nachteil dieser Lösung ist darin zu sehen, daß nicht die Anzahl der erforderlichen Übertragungskanäle oder zumindest durch Spreizung die erforderliche Sendeleistung in den Übertragungskanälen minimiert werden kann. Auch sinkt die Kodeeffizienz, da teilweise auf dieselben Daten eine Dehnung und anschließend eine Stauchung oder umgekehrt durchgeführt wird. Die Kodeeffizienz gibt das Verhältnis der Änderung der Bitfehlerrate (BER) zu Änderung der Redundanz der Daten an, wobei das Signal/Rausch-Verhältnis als konstant anzusehen ist.

Es ist Aufgabe der Erfindung, diese Nachteile zu beseitigen. Diese Aufgabe wird durch das Verfahren mit den Merkmalen des Anspruchs 1 und die Vorrichtung gemäß Anspruch 7 gelöst. Vorteilhafte Weiterbildungen der Erfindung sind den Unteransprüchen zu entnehmen.

Die Erfindung ermöglicht, wie bereits bekannt, einen dienstspezifischen statischen Ratenanpassungsfaktor zu bestimmen, der eine dienstspezifische Dienstqualität einstellt. Es wird jedoch noch keine Ratenanpassung mit diesem Faktor durchgeführt. Für die Verbindung kann stattdessen ein dynamischer verbindungsorientierter Ratenanpassungsfaktor bestimmt werden, der unter Berücksichtigung der noch nicht durchgeführten dienstspezifischen Datenratenanpassung die hypothetische Datenmenge an eine im nächsten Rahmen verfügbare Datenmenge anpaßt. Dabei können auch mehrere Optimierungsschleifen durchlaufen werden, wenn diese Datenmenge aufgrund einer ausreichenden Anzahl von Übertragungskanälen und Spreizfaktoren nicht fest vorgegeben ist. Die benötigte Gesamtübertragungskapazität kann damit optimiert werden.

In einem einzigen Schritt wird ein dienstspezifischer Gesamtratenanpassungsfaktor durch Kombination des statischen Ratenanpassungsfaktors und des dynamischen verbindungsorientierten Ratenanpassungsfaktors bestimmt und erst dann die einzige und damit einstufige Datenratenanpassung durchgeführt. Die Daten der Dienste werden also mit diesen dienstspezifischen Ratenanpassungsfaktoren gestaucht bzw. gedehnt und in einen Rahmen zur Übertragung eingetragen.

Die statische und dynamische Ratenanpassung erfolgt zeitgleich in einem Schritt, wobei nur die Berechnung der Faktoren aber nicht die Anpassung selbst in einer Optimierungsschleife durchgeführt werden kann, so daß die Kodeeffizienz steigt und gegensätzliche Ratenanpassung für dieselben Daten verhindert werden.

Falls bestimmt Rahmenintervalle verkürzt werden müssen, um Messungen durchzuführen (slotted mode), kann dies bereits bei der zur Verfügung stehenden Datenmenge berücksichtigt werden.

Nach einer vorteilhaften Weiterbildung der Erfindung wird der dynamische verbindungsorientierte Ratenanpassungsfaktor auf einen für den am stärksten zu stauchenden Dienst bezogenen Minimalwert gesetzt und dafür eine Anzahl an Übertragungskanälen und bei der Übertragung zu verwendenden Spreizfaktoren nach einer vorgegebenen Kodiervorschrift bestimmt. Ist dies erfolgt, so wird daraufhin der dynamische verbindungsorientierte Ratenanpassungsfaktor als Quotient aus der für die Verbindung maximal verfügbaren Datenmenge und der Summe der Datenmenge aller Dienste der Verbindung unter Berücksichtigung der jeweiligen dienstspezifischen statischen Ratenanpassungsfaktoren bestimmt. Der Minimalwert wird festgelegt, um die Kodeeffizienz nicht zu stark zu beeinträchtigen. Durch diese Weiterbildung der diese Weiterbildung der Erfindung werden minimale Ressourcen benötigt.

Falls der dynamische verbindungsorientierte Ratenanpassungsfaktor größer als ein auf den am stärksten zu dehnenden Dienst bezogener Maximalwert ist, so ist es vorteilhaft, zusätzliche Daten in den Rahmen aufzunehmen und den dynamischen verbindungsorientierten Ratenanpassungsfaktor erneut zu bestimmen. Damit wird nicht unnötig Übertragungskapazität verschenkt.

Die statischen Ratenanpassungsfaktoren sind vorteilhafterweise vor der Bestimmung des dynamischen verbindungsorientierten Ratenanpassungsfaktors derart auf ihren geometrischen Mittelwert bezogen, daß das Produkt aller statischen Ratenanpassungsfaktoren einer Verbindung gleich eins ist. Zur Optimierung der Kodeeffizienz ist damit bei ähnlichen Datenraten der Dienste nur eine möglichst geringe Ratenanpassung nötig.

Eine Abbildungsvorschrift zum Multiplexen der Daten der Dienste in einem zu übertragenen Rahmen ist vorteilhafterweise derart festgelegt, daß sie der Sende- und Empfangsseite gleichermaßen bekannt ist, so daß nur die Datenmenge pro Dienst signalisiert wird und die Anordnung der Daten im Rahmen eindeutig nachvollziehbar ist. Auch die Ratenanpassung ist aus der signalisierten Datenmenge rekonstruierbar.

Ausführungsbeispiele der Erfindung werden anhand der beiliegenden Zeichnungen näher erläutert.

Dabei zeigen

Fig 1 eine schematische Darstellung eines Funk-Kommunikationssystems,

Fig 2 eine schematische Darstellung von Anforderungen an drei gleichzeitig zu übertragende Dienste,

Fig 3 ein Blockschaltbild eines Ratenanpassungverfahrens, und

Fig 4 eine Darstellung einer Optimierungsschleife bei der Ratenanpassung.

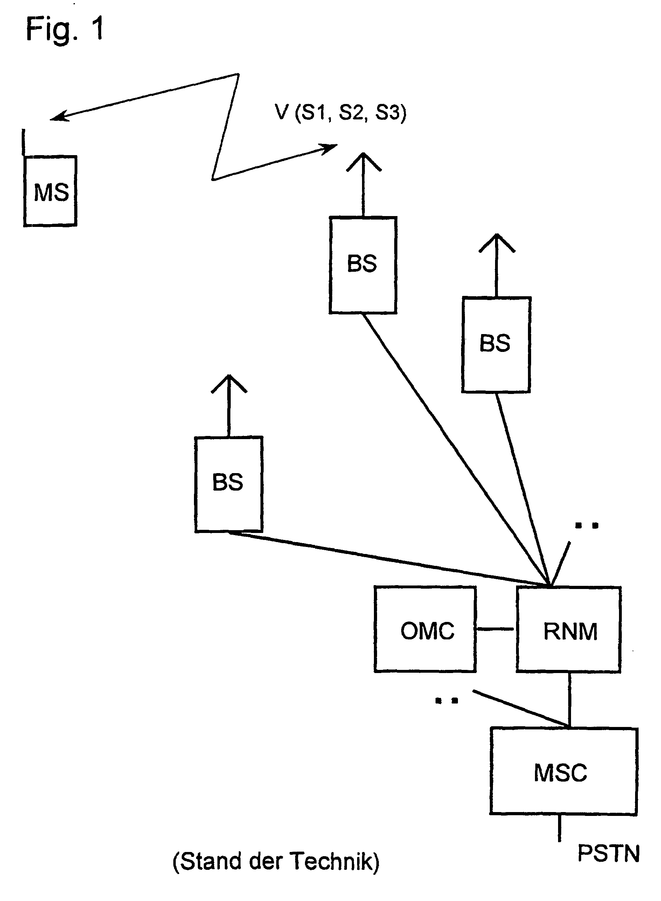

Das in Fig 1 dargestellte Mobilfunksystem als Beispiel eines Funk-Kommunikationssystems besteht aus einer Vielzahl von Mobilverrnittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet.

In Fig 1 ist eine Verbindung V zur gleichzeitiger Übertragung von Nutzinformationen mehrerer Dienste S1, S2, S3 zwischen einer Basisstation BS und einer Mobilstation MS dargestellt. Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

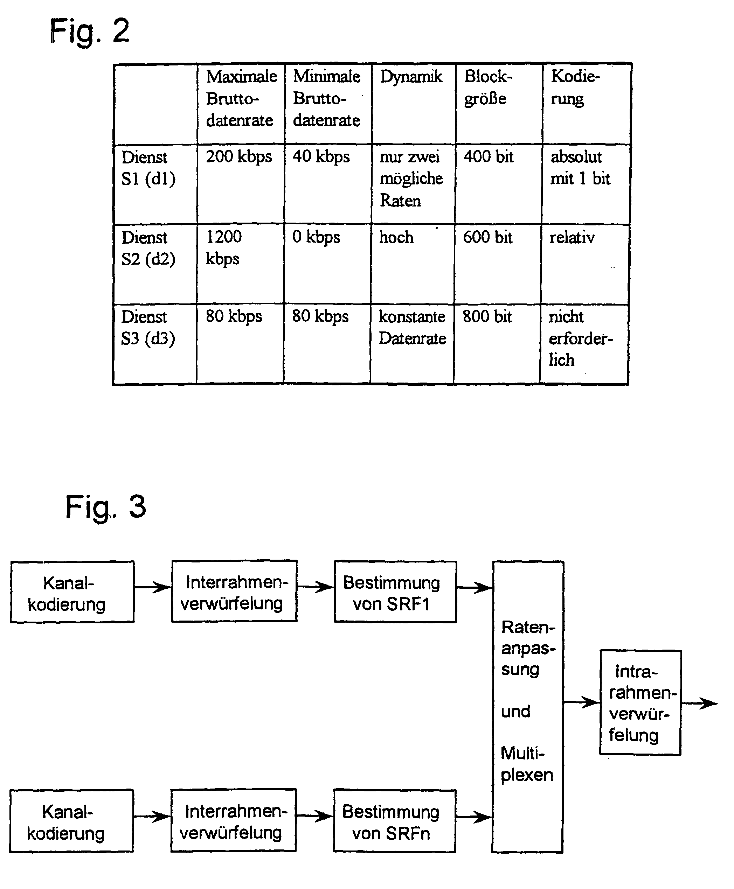

Innerhalb der Verbindung V werden gleichzeitig die Daten d1, d2, d3 von drei unterschiedlichen Diensten S1, S2, S3 nach Fig 2 übertragen. Diese drei Dienste S1, S2, S3 unterscheiden sich stark in der möglichen Werten und der Dynamik der Datenrate. Dementsprechend wurden die Blockgrößen B und eine absolute oder relative Kodierung gewählt.

Bezugnehmend auf Fig 3 wird als erster Schritt der Datenübertragung sendeseitig eine Kanalkodierung für jeden Dienst S1, S2, S3 durchgeführt, die für jeden Dienst individuell in Abhängigkeit von der erforderlichen maximalen Bitfehlerrate (BER) ausgewählt wird. Daraufhin wird optional für jeden Dienst S1, S2, S3 eine Verwürfelung der Daten d1, d2, d3 über mehrere Rahmen fr (Interrahmen-Verwürfelung) durchgeführt und anschließend die statischen Ratenanpassungsfaktoren SRFi für jeden der Dienste i bestimmt. Dabei wird eine dienstspezifische Dienstqualität eingestellt.

Als nächster Schritt wird die Ratenanpassung durchgeführt, wobei der im folgenden vorgestellte Algorithmus gleichzeitig das Multiplexen der Dienste beinhaltet. Es schließt sich an die Ratenanpassung und das Multiplexen eine Verwürfelung der Daten innerhalb eines Rahmens fr an (Intrarahmen-Verwürfelung).

Die dienstspezifischen Ratenanpassungsfaktoren SFRi für jeden Dienst i beschreiben eine Dehnung bzw. Stauchung der Daten, wobei eine Dehnung durch Redundanzhinzufügung (z.B. Wiederholung einzelner Bits) und eine Stauchung z.B. durch Punktierung erreicht wird. Entsprechend der bestimmten Ratenanpassungsfaktoren kann auch adaptiv die Kodierung und damit die Redundanzhinzufügung eingestellt werden. Diese dienstspezifischen Ratenanpassungsfaktoren SFRi hängen nicht von der für jeden Dienst S1, S2, S3 im nächsten Rahmen fr zu übertragenden Datenmenge ab, sondern vom Kanalkodierungsverfahren.

Zur Optimierung der Kodeeffizienz werden die dienstspezifischen Ratenanpassungsfaktoren SFRi auf ihren geometrischen Mittelwert bezogen, so daß gilt:

$$\prod_{i=1}^{n} SRF_i = 1 \ . \tag{1}$$

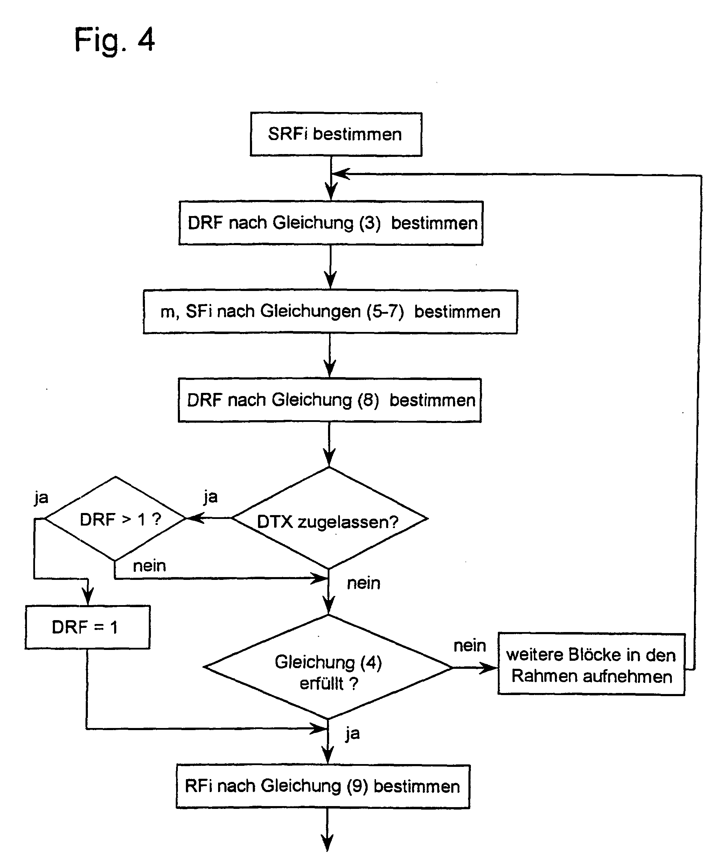

Die Berechnung der zur Ratenanpassung und zum Multiplexen benötigten Faktoren SRF, DRF, RF, SF, m wird anhand Fig 4 erläutert.

Mit dem minimalen Spreizfaktor (SF=4) können Nmax Bits in einem Rahmen fr übertragen werden. Damit kann die folgende Ungleichung angegeben werden, welche die Abhängigkeit zwischen der durch die Anzahl m und den jeweiligen Spreizfaktor SFj (j=1..m) der Übertragungskanäle gegebenen und durch die Datenblöcke der n Dienste geforderten Übertragungskapazität in einem Rahmen beschreibt:

$$DRF \cdot \sum_{i=1}^{n} Bi \cdot Ki \cdot SRFi \leq \sum_{j=1}^{m} N\max \cdot \frac{SF\min}{SFj} \qquad (2)$$

Die rechte Seite von Gleichung (2) beschreibt die mit m Übertragungskanälen zur Verfügung stehende Bitzahl pro Rahmen fr, während auf der linken Seite der Ungleichung der von n Diensten, von denen jeweils Ki Blöcke mit der Blockgröße Ki und den statischen Ratenanpassungsfaktoren SRFi übertragen werden sollen, geforderte Kapazität gegeben ist.

Der in Gleichung (2) eingeführte dynamische Ratenanpassungsfaktor DRF ermöglicht die zusätzliche gleichförmige Dehnung bzw. Stauchung sämtlicher Daten in einem Rahmen fr. Dieser Faktor DRF ist verbindungsorientiert. Das Gleichheitszeichen gilt dann, wenn der Rahmen fr vollständig mit Daten gefüllt werden muß, um eine nicht-kontinuierliche Übertragung (DTX discontinuous transmission) zu vermeiden.

Bei der Bestimmung des verbindungsorientierten dynamischen Ratenanpassungsfaktors DRF darf ein Minimalwert nicht unterschritten werden, der sich als Quotienten aus dem minimalen Gesamtratenanpassungsfaktor RFmin und dem Minimum aller statischen Ratenanpassungsfaktoren SRF ergibt, um durch Punktierung die Kodeeffizienz nicht zu sehr zu beeinträchtigen.

$$DRF \geq DRF\min = \frac{RF\min}{\underset{i}{Min}(SRFi)} \qquad (3a)$$

Die Berechnung des Minimalwertes DRFmin ist nach der vorangehenden Ungleichung (3a) für den speziellen Fall gültig, daß für alle Dienste i derselbe minimale Gesamtratenanpassungsfaktor RFmin gilt. Allgemein können jedoch für unterschiedliche Dienste i auch individuelle Gesamtratenanpassungsfaktoren RFmin gelten. So kann für einen bestimmter Dienst i beispielsweise der Fall auftreten, daß keine Punktierung durchgeführt wird (RFmin = 1), währenddessen für andere Dienste i durchaus eine Punktierung erfolgt. Abhängig von dem verwendeten Kodierverfahren ist somit jedem Dienst i ein individueller minimaler Gesamtratenanpassungsfaktor RFmin zuordenbar. Um dieser Variabilität des diensteabhängigen Gesamtratenanpassungsfaktors RFmin Rechnung zu tragen, wird die Ungleichung (3a) in der folgenden Weise erweitert.

$$DRF \geq DRF\min = \underset{i}{Max}\left(\frac{RF\min, i}{SRFi}\right) \qquad (3b)$$

Analog sollte auch ein Maximalwert nicht überschritten werden, der sich als Quotienten aus dem maximalen Gesamtratenanpassungsfaktor RFmax und dem Maximum aller statischen Ratenanpassungsfaktoren SRF ergibt, um durch Wiederholung nicht zuviel Übertragungskapazität zu verschenken.

$$DRF \leq DRF\max = \frac{RF\max}{\underset{i}{Max}(SRFi)} \qquad (4)$$

Damit können nun mit Gleichung (2) abhängig von Bi, Ki sowie SRFi die Werte für m, SFj und DRF berechnet werden, die eine optimale Nutzung der physikalischen Kanäle gestatten. Hierzu muß lediglich eine eindeutige Reihenfolge von Spreizkodes zwischen Sender und Empfänger festgelegt sein, die abhängig von der Anzahl der in einem Rahmen fr insgesamt zu übertragenden Bits zugeordnet werden. Diese Abbildungsvorschrift ist systemweit festgelegt oder wird zu Verbindungsbeginn signalisiert.

Im folgenden wird eine Randbedingung angenommen, die vorschreibt, möglichst wenig Übertragungskanäle zu belegen. In diesem Fall gilt, daß bei m>1 alle übertragungskanäle bis auf einen Ubertragungskanal den minimalen Spreizfaktor SFmin aufweisen müssen. Es sei betont, daß es sich bei der Kodierungsvorschrift nach den Gleichungen (5) bis (7) um eines von mehreren möglichen Beispielen handelt, da auch andere Randbedingungen angenommen werden können.

Mit dem minimal zulässigen Wert des dynamischen Ratenanpassungsfaktor DRFmin aus Gleichung (3a, 3b) ergibt sich für die erforderliche Kanalanzahl m ($\lceil\ \rceil$ = Aufrundungsoperator):

$$m = \left\lceil \frac{1}{N\max} \cdot DRF\min \cdot \sum_{i=1}^{n} Bi \cdot Ki \cdot SRFi \right\rceil \qquad (5)$$

und die Spreizfaktoren

$$SFm = \left\lfloor \frac{SF\min \cdot N\max}{DRF\min \cdot \sum Bi \cdot Ki \cdot SRFi - (m-1) \cdot N\max} \right\rfloor \qquad (6)$$

mit $\lfloor\ \rfloor$ als Abrundungsoperator auf den nächstmöglichen Spreizfaktor

$$SFj = 4 \text{ für } m>1 \text{ und } j=1..m-1. \qquad (7)$$

Der dynamische Ratenanpassungsfaktor DRF wird nun abweichend von seinem minimalen Wert DRFmin erneut berechnet:

$$DRF = \frac{N\max \cdot \left(m - 1 + \frac{SF\min}{SFm}\right)}{\sum_{i=1}^{n} Bi \cdot Ki \cdot SRFi} \qquad (8)$$

Anstelle des Produktes Bi*Ki kann auch eine Datenmenge Ni eingesetzt werden, wenn keine blockweise Übertragung erfolgt bzw. die Blockgröße Bi gleich ein Bit ist.

Um die Kodeeffizienz möglichst wenig zu beeinträchtigen, soll die Dehnung bzw. Stauchung auf das erforderliche Mindestmaß beschränkt werden, woraus folgt, daß der dynamische Ratenanpassungsfaktor DRF möglichst nahe bei 1 liegen sollte. Dies bedeutet, daß bei nicht-kontinuierlicher Übertragung die mögliche Übertragungskapazität vollständig zu nutzen ist, wenn hierdurch die Stauchung reduziert werden kann. Auch bei nicht-kontinuierlicher Übertragung wird ein Wert aus Gleichung (8) übernommen, solange er kleiner oder gleich 1 ist. Gilt DRF > 1, so wird DRF auf 1 gesetzt.

Aus der Kenntnis des dynamischen Ratenanpassungsfaktors DRF kann für alle Dienste i der resultierende Ratenanpassungsfaktor RFi angegeben werden:

$$RFi = DRF * SFRi (i=1..n) \qquad (9)$$

Ist für einen Dienst i RFi>1 so wird eine Wiederholung von Bits durchgeführt, bei RF<1 wird eine Punktierung vorgenommen. In jedem Fall wird durch die Ratenanpassung in einem Schritt für die Daten d1, d2, d3 jedes Dienst nur eines beider Verfahren eingesetzt.

Durch die Kombination von statischer und dynamischer Ratenanpassung wird automatisch die Anzahl m der benötigten Übertragungskanäle minimiert und gleichzeitig die spreizfaktoren SF maximiert, um möglichst wenig Interferenzen zu erzeugen. Damit wirkt sich die implizite dynamische Ratenanpassung auch vorteilhaft aus, falls DTX zugelassen ist.

Optional kann wenn der dynamische Ratenanpassungsfaktor DRF > DRFmax ist aus den in einer Warteschleife zwischengespeicherten zur Übertragung vorgesehenen Blöcken einzelne ausgewählt werden und den bereits dem Rahmen fr zugeordneten Blöcken hinzugezählt werden. Im Sinne einer Optimierungsschleife werden die Faktoren SRF, DRF, RF erneut berechnet. Muß die Anzahl m der Übertragungskanäle nicht erhöht und die Spreizfaktoren SF nicht verringert werden, so kann der Block zusätzlich zu den anderen Daten übertragen werden.

**Patentansprüche**

1. Verfahren zur Datenratenanpassung einer gleichzeitigen Funkübertragung von Daten mehrerer Dienste (S1, S2, S3) einer Verbindung (V) zwischen einer Basisstation (BS) und einer Teilnehmerstation (MS), bei dem

   - die in einem Rahmen zu übertragenden Daten jedes Dienstes (S1, S2, S3) mit einem dienstspezifischen Gesamtratenanpassungsfaktor gestaucht bzw. gedehnt werden,
   - wobei der Gesamtratenanpassungsfaktor jedes Dienstes so bestimmt wird, dass er von einem dienstspezifischen statischen Ratenanpassungsfaktor abhängt, der eine dienstspezifische Dienstqualität einstellt,
   - und wobei der Gesamtratenanpassungsfaktor jedes Dienstes weiterhin so bestimmt wird, dass er zusätzlich von einem verbindungsorientierten dynamischen Ratenanpassungsfaktor abhängt, der die Summe der Datenmenge aller Dienste (S1, S2, S3) der Verbindung (V) unter Berücksichtigung der jeweiligen dienstspezifischen statischen Ratenanpassungsfaktoren an die im Rahmen verfügbare Übertragungskapazität anpaßt.

2. Verfahren nach Anspruch 1, bei dem
   der dynamische verbindungsorientierte Ratenanpassungsfaktor auf einen für den am stärksten zu stauchenden Dienst (S1, S2, S3) bezogenen Minimalwert gesetzt wird und dafür eine Anzahl an Übertragungskanälen und bei der Übertragung zu verwendenden Spreizfaktoren nach einer vorgegebenen Kodiervorschrift bestimmt wird, und daraufhin der dynamische verbindungsorientierte Ratenanpassungsfaktor als Quotient aus der für die Verbindung maximal verfügbaren Datenmenge und der Summe der Datenmenge aller Dienste (S1, S2, S3) der Verbindung (V) unter Berücksichtigung der jeweiligen dienstspezifischen statischen Ratenanpassungsfaktoren erneut bestimmt wird.

3. Verfahren nach Anspruch 1 oder 2, bei dem
   falls der dynamische verbindungsorientierte Ratenanpassungsfaktor größer als ein auf den am stärksten zu dehnenden Dienst bezogenen Maximalwert ist, werden zusätzliche Daten in den Rahmen aufgenommen und der dynamische verbindungsorientierte Ratenanpassungsfaktor erneut bestimmt

4. Verfahren nach einem der vorherigen Ansprüche, bei dem die Daten der Dienste (S1, S2, S3) nach einer vorgegebenen Kodiervorschrift in einen Rahmen eingetragen werden, die auf eine minimale Anzahl (m) von Übertragungskanälen für die Verbindung (V) orientiert ist.

5. Verfahren nach einem der vorherigen Ansprüche, bei dem die statischen Ratenanpassungsfaktoren vor der Bestimmung des dynamischen verbindungsorientierten Ratenanpassungsfaktors derart auf ihren geometrischen Mittelwert bezogen sind, daß das Produkt aller statischen Ratenanpassungsfaktoren einer Verbindung (V) gleich eins ist.

6. Verfahren nach einem der vorherigen Ansprüche, bei dem für jeden übertragenen Rahmen die Datenmenge pro Dienst (S1, S2, S3) signalisiert wird.

7. Vorrichtung zur Datenratenanpassung einer gleichzeitigen Funkübertragung von Daten mehrerer Dienste (S1, S2, S3) einer Verbindung (V) zwischen einer Basisstation (BS) und einer Teilnehmerstation (MS),

   - mit Mitteln zum Stauchen bzw. Dehnen von in einem Rahmen zu übertragenden Daten jedes Dienstes (S1, S2, S3) mit einem dienstspezifischen Gesamtratenanpassungsfaktor,

- und unit Mitteln zur Bestimmung des Gesamtratenanpassungsfaktors derart, dass der Gesamtratenanpassungsfaktor jedes Dienstes von einem dienstspezifischen statischen Ratenanpassungsfaktor abhängt, der eine dienstspezifische Dienstqualität einstellt und der Gesamtratenanpassungsfaktor jedes Dienstes zusätzlich von einem verbindungsorientierten dynamischen Ratenanpassungsfaktor abhängt, der die Summe der Datenmenge aller Dienste (S1, S2, S3) der Verbindung (V) unter Berücksichtigung der jeweiligen dienstspezifischen statischen Ratenanpassungsfaktoren an die im Rahmen verfügbare Übertragungskapazität anpaßt.

## Claims

1. Method for data rate matching for simultaneous radio transmission of data for a number of services (S1, S2, S3) of a connection (V) between a base station (BS) and a subscriber station (MS), in which

   - the data of each service (S1, S2, S3) to be transmitted in a frame is compressed or expanded using a service-specific overall rate matching factor,
   - wherein the overall rate matching factor for each service is determined such that it depends on a service-specific steady-state rate matching factor which sets a service-specific quality of service,
   - and wherein the overall rate matching factor for each service is furthermore determined such that it additionally depends on a call-oriented dynamic rate matching factor which matches the total volume of data of all services (S1, S2, S3) of the connection (V) to the transmission capacity available in the frame, taking into consideration the respective service-specific steady-state rate matching factors.

2. Method according to Claim 1, in which the dynamic connection-oriented rate matching factor is set to a minimum value related to the service (S1, S2, S3) to be compressed most severely and for this purpose, a number of transmission channels and of spread factors to be used during the transmission is determined in accordance with a predetermined coding rule, and thereupon the dynamic connection-oriented rate matching factor is redetermined as a quotient of the maximum volume of data available for the connection and the sum of the volume of data of all services (S1, S2, S3) of the connection (V), taking into consideration the respective service-specific steady-state rate matching factors.

3. Method according to Claim 1 or 2, in which, if the dynamic connection-oriented rate matching factor is greater than a maximum value related to the service to be expanded most severely, additional data are accepted into the frame and the dynamic connection-oriented rate matching factor is redetermined.

4. Method according to one of the preceding claims, in which the data of the services (S1, S2, S3) are inserted in a frame in accordance with a predetermined coding rule which is oriented toward a minimum number (m) of transmission channels for the connection (V).

5. Method according to one of the preceding claims, in which, before the dynamic connection-oriented rate matching factor is determined, the steady-state rate matching factors are referred to their geometric mean in such a manner that the product of all steady-state rate matching factors of a connection (V) is equal to one.

6. Method according to one of the preceding claims, in which the volume of data per service (S1, S2, S3) is signalled for each transmitted frame.

7. Device for data rate matching for simultaneous radio transmission of data for a number of services (S1, S2, S3) of a connection (V) between a base station (BS) and a subscriber station (MS),

   - having means for compressing and expanding data for each service (S1, S2, S3) to be transmitted in a frame using a service-specific overall rate matching factor,
   - and means for determining the overall rate matching factor such that the overall rate matching factor for each service depends on a service-specific steady-state rate matching factor which sets a service-specific quality of service and the overall rate matching factor for each service additionally depends on a call-oriented dynamic rate matching factor which matches the total volume of data of all services (S1, S2, S3) of the connection (V) to the transmission capacity available in the frame, taking into consideration the respective service-specific steady-state rate matching factors.

**Revendications**

1. Procédé d'adaptation de débit de données d'une transmission radio simultanée de données de plusieurs services (S1, S2, S3) d'une connexion (V) entre une station de base (BS) et une station d'abonné (MS) dans lequel

   - les données de chaque service (S1, S2, S3) à transmettre dans une trame sont comprimées resp. subissent une expansion avec un facteur d'adaptation de débit global spécifique à chaque service,
   - le facteur d'adaptation de débit global de chaque service est déterminé de manière telle qu'il dépend d'un facteur d'adaptation de débit statique spécifique à chaque service, lequel facteur établit une qualité de service spécifique à chaque service et
   - le facteur d'adaptation de débit global de chaque service est en outre déterminé de manière telle qu'il dépend additionnellement d'un facteur d'adaptation de débit dynamique orienté connexion, lequel adapte à la capacité de transmission disponible dans la trame la somme de l'ensemble des données de tous les services (S1, S2, S3) de la connexion (V) compte tenu des facteurs d'adaptation de débit statiques respectifs spécifiques à chaque service.

2. Procédé selon la revendication 1, dans lequel
   le facteur d'adaptation de débit dynamique orienté connexion est mis à une valeur minimale rapportée au service à comprimer le plus fortement (S1, S2, S3) et, à cet effet, un nombre de canaux de transmission et de facteurs d'étalement à utiliser lors de la transmission est déterminé selon une règle de codage donnée et
   le facteur d'adaptation de débit dynamique orienté connexion est ensuite déterminé de nouveau en tant que quotient à partir de l'ensemble de données maximalement disponible pour la connexion et de la somme de l'ensemble de données de tous les services (S1, S2, S3) de la connexion (V) compte tenu des facteurs d'adaptation de débit statiques respectifs spécifiques à chaque service.

3. Procédé selon la revendication 1 ou 2, dans lequel,
   si le facteur d'adaptation de débit dynamique orienté connexion est supérieur à une valeur maximale rapportée au service qui doit faire l'objet de la plus forte expansion, des données additionnelles sont admises dans la trame et le facteur d'adaptation de débit dynamique orienté connexion est déterminé de nouveau.

4. Procédé selon l'une des revendications précédentes, dans lequel
   les données des services (S1, S2, S3) sont insérées dans une trame selon une règle de codage donnée qui est orientée sur un nombre minimal (m) de canaux de transmission pour la connexion (V).

5. Procédé selon l'une des revendications précédentes, dans lequel
   les facteurs d'adaptation de débit statiques sont rapportés à leur moyenne géométrique, avant la détermination du facteur d'adaptation de débit dynamique orienté connexion, de manière telle que le produit de tous les facteurs d'adaptation de débit statiques d'une connexion (V) soit égal à un.

6. Procédé selon l'une des revendications précédentes, dans lequel
   l'ensemble de données par service (S1, S2, S3) est signalé pour chaque trame transmise.

7. Dispositif d'adaptation de débit de données d'une transmission radio simultanée de données de plusieurs services (S1, S2, S3) d'une connexion (V) entre une station de base (BS) et une station d'abonné (MS), comprenant

   - des moyens pour comprimer des données de chaque service (S1, S2, S3) à transmettre dans une trame resp. leur faire subir une expansion avec un facteur d'adaptation de débit global spécifique à chaque service et
   - des moyens pour déterminer le facteur d'adaptation de débit global de manière telle que le facteur d'adaptation de débit global de chaque service dépende d'un facteur d'adaptation de débit statique spécifique à chaque service, lequel facteur établit une qualité de service spécifique à chaque service, et le facteur d'adaptation de débit global de chaque service dépend additionnellement d'un facteur d'adaptation de débit dynamique orienté connexion qui adapte à la capacité de transmission disponible dans la trame la somme de l'ensemble des données de tous les services (S1, S2, S3) de la connexion (V) compte tenu des facteurs d'adaptation de débit statiques respectifs spécifiques à chaque service.

# Fig. 1

V (S1, S2, S3)

(Stand der Technik)

# Fig. 2

| | Maximale Brutto-datenrate | Minimale Brutto-datenrate | Dynamik | Block-größe | Kodie-rung |
|---|---|---|---|---|---|
| Dienst S1 (d1) | 200 kbps | 40 kbps | nur zwei mögliche Raten | 400 bit | absolut mit 1 bit |
| Dienst S2 (d2) | 1200 kbps | 0 kbps | hoch | 600 bit | relativ |
| Dienst S3 (d3) | 80 kbps | 80 kbps | konstante Datenrate | 800 bit | nicht erforder-lich |

# Fig. 3

## Fig. 4